(19) Europäisches Patentamt
European Patent Office
Office européen des brevets

(11) EP 0 565 432 B1

(12) FASCICULE DE BREVET EUROPEEN

(45) Date de publication et mention de la délivrance du brevet:
**12.11.1997 Bulletin 1997/46**

(51) Int. Cl.[6]: **C03C 3/32**, C03B 8/02, C03C 13/04

(21) Numéro de dépôt: **93400890.5**

(22) Date de dépôt: **06.04.1993**

(54) **Procédé de synthèse de verre fluoré par voie sol-gel et fibre optique réalisée dans le verre fluoré obtenu selon ce procédé**

Verfahren zur Synthese von Fluoridglas durch das Sol-Gel-Verfahren und optische Faser hergestellt aus durch dieses Verfahren erhaltenem Glas

Process for the synthesis of fluoride glass by the sol-gel process and optical fiber of fluoride glass obtained by this process

(84) Etats contractants désignés:
**DE GB**

(30) Priorité: **08.04.1992 FR 9204300**

(43) Date de publication de la demande:
**13.10.1993 Bulletin 1993/41**

(73) Titulaire: **FRANCE TELECOM**
**75015 Paris (FR)**

(72) Inventeurs:
- **Poulain, Marcel**
  **F-35700 Rennes (FR)**
- **Saad, Mohammed**
  **F-35700 Rennes (FR)**

(74) Mandataire:
**Dubois-Chabert, Guy et al**
**Société de Protection des Inventions**
**25, rue de Ponthieu**
**75008 Paris (FR)**

(56) Documents cités:
- **NATO ASI Ser., Ser. E, 123, (Halide Glass Infrared Fiberopt.), 1987, pages 385- 391. D.R.Ulrich: "Interactions with Other Fields"**
- **CHEMICAL ABSTRACTS, vol. 110, no. 12, 12 Juin 1989, Columbus, Ohio, US; abstract no. 217717p, K.FUJIURA ET AL. page 315 ;**
- **J. MATER. RES. vol. 7, no. 6, Juin 1992, pages 1534 - 1540 A.M. MAILHOT ET AL. 'Reactive Atmosphere Synthesis of Sol-Gel Heavy Metal Fluoride Glasses'**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Rank Xerox (UK) Business Services
2.14.23/3.4

## Description

La présente invention concerne un procédé de synthèse de verre fluoré par voie sol-gel, ainsi qu'une fibre optique réalisée dans un verre fluoré obtenu par ce procédé.

L'intérêt des verres fluorés pour la transmission infrarouge, spécialement par fibres optiques, à été souligné dans de nombreux articles scientifiques reflétant l'activité importante déployée à ce sujet depuis 1980. L'ouvrage "Fluoride glasses" écrit par A. COMYNS et publié par J. WILEY et SONS en 1989, traite justement de ce propos. Ces fibres optiques ont de nombreuses applications dans le domaine de la spectroscopie, des lasers, des capteurs et des dispositifs d'imagerie par infrarouge.

L'un des problèmes technologiques rencontré lors du dévelopement de ces nouveaux types de verres réside dans l'obtention de matériaux de très haute, pureté ainsi que dans l'élimination des défauts et des impuretés de toute nature affectant la qualité optique des composants. Or, les techniques verrières traditionnelles basées sur la fusion et la coulée de mélanges fondus en creuset de platine, induisent une pollution résiduelle liée au contact du verre avec le métal et à l'impossibilité pratique de contrôler les facteurs physico-chimiques conduisant à une certaine contamination du verre.

Diverses techniques ont été envisagées pour remédier à ces inconvénients.

Une première technique consiste à synthétiser des couches de verre fluoré par dépôt chimique en phase gazeuse (CVD), par analogie avec des techniques utilisées pour la fabrication de fibres optiques à base de silice. Cette technique consiste à réaliser le dépôt de couches minces de verre fluoré, sur un substrat, mais à de très hautes températures. Ce dernier facteur limite le choix des substrats sur lesquels ces dépôts peuvent être réalisés. Les essais effectués ont permis d'obtenir des résultats encourageants, mais toutefois, on a pu observer qu'il était difficile de faire passer en voie gazeuse, des cations tels que le zirconium et le baryum et qu'il était également peu aisé de contrôler les réactions de fluoration.

On connaît également d'après un article de Ian M. THOMAS intitulé "Porous fluoride antire-flective coatings" publié dans Applied Optics, vol. 27, n° 16, 15 août 1988, pages 3356-3358, un procédé de synthèse de revêtement fluoré par voie sol-gel. Dans ce cas, on utilise du méthoxyde de magnésium dissous dans du méthanol que l'on ajoute à une solution aqueuse de fluorure d'hydrogène, afin d'obtenir une suspension colloïdale de $MgF_2$ qui ensuite seulement est déposée. Toutefois, ce procédé ne permet pas d'obtenir un verre mais une solution colloïdale qui produit par évaporation et densification un matériau polycristallin.

Enfin, la difficulté majeure rencontrée pour l'obtention de verre fluoré par la voie sol-gel concerne l'eau qui est considérée comme une impureté très dommageable pour ces matériaux. Pour cette raison, il a été envisagé de synthétiser des colloïdes ou des gels entièrement fluorés, au sein de solvants non aqueux (tétrachlorotétrafluoropropane). Cependant, cette voie n'a pas permis d'atteindre des résultats satisfaisants, comme cela ressort de l'article "Sol-gel reparation of amorphous ZBLA heavy metal fluoride powders" de P.J. MELLING et M.A. THOMPSON dans le Journal of Material Research Society, vol. 5, n° 5, mai 1990, pp. 1092-1094.

Enfin, on connaît d'après l'article de D.R. ULRICH "Interaction with other fields", NATO ASI Ser., Ser. E, 123 (Halide Glass Infrared Fibreopt.), 1987, 385-391, une approche théorique pour la synthèse des verres fluorés par voie sol-gel. Toutefois, cet article ne donne aucun mode de réalisation pratique.

En conséquence, l'invention a pour objet de remédier aux inconvénients précités.

A cet effet, l'invention concerne un procédé de synthèse de verre fluoré par voie sol-gel comprenant les étapes consistant à :

- préparer un gel oxygéné humide à partir de précurseurs contenant tous les cations constitutifs dudit verre fluoré,
- hydrolyser ce gel, généralement par addition d'une solution acide, puis
- sécher ce gel.

Selon les caractéristiques de l'invention, ce procédé comprend en outre l'étape consistant à :

- traiter ce gel oxygéné par un agent fluorant en phase gazeuse, à une température inférieure à la température de cristallisation du verre, cet agent fluorant étant choisi parmi le fluorure d'hydrogène, le fluor gazeux, le trifluorure de chlore ou le trifluorure de brome.

Les agents fluorants utilisés et notamment le fluorure d'hydrogène gazeux, présentent l'avantage de pouvoir être obtenus avec une pureté grandement supérieure à celle du bifluorure d'ammonium utilisé classiquement pour la synthèse des verres fluorés.

Selon une variante préférée de réalisation de l'invention, les précurseurs utilisés pour la préparation du gel oxygéné humide sont des alcoxydes en $C_1$ à $C_4$ des cations constitutifs du verre fluoré et de préférence des méthoxydes de ces cations. Ces alcoxydes sont dissous dans une solution alcoolique.

Ces précurseurs peuvent facilement faire l'objet de traitements de purification spécifiques qui sont impossibles avec les précurseurs minéraux habituels utilisés lors de la synthèse des verres fluorés. De plus, les solvants alcooliques permettent de bien dissoudre les alcoxydes et présentent l'avantage d'être miscibles à l'eau ou aux solutions aqueuses acides et de s'éliminer facilement par chauffage. On pourrait également utiliser comme solvants les cétones.

Les cations sont choisis notamment parmi les éléments des groupes Ia, IIa, IIIa, IVa, IIb, IIIb ou IVb de la classification périodique ou parmi les lanthanides ou les actinides.

De préférence, les cations sont choisis parmi le sodium, le magnésium, le calcium, le strontium, le baryum, le scandium, l'yttrium, le lanthane, le thorium, le zirconium, le hafnium, le zinc, le cadmium, le bore, l'aluminium, le gallium, l'indium, le silicium ou le plomb.

Le gallium, l'indium, le scandium ou le zinc sont susceptibles de conduire à des verres de fluorures. Le thorium, le calcium, le strontium, le plomb ou le cadmium peuvent être incorporés dans les verres de fluorozirconates.

De préférence, la température de fluoration est comprise entre 150°C et 250°C environ.

Ainsi, les températures requises pour la mise en oeuvre de ce procédé sont largement inférieures à celles des procédés traditionnels. Par ces techniques sol-gel de chimie douce, on peut ainsi obtenir des éléments vitreux sans jamais atteindre la température de fusion du verre. On réduit ainsi les risques de contamination liés à la température et l'on obtient des éléments vitreux que l'on ne pourrait pas obtenir par des techniques classiques.

Enfin, l'invention concerne également une fibre optique fabriquée à partir du verre fluoré préparé selon le procédé de synthèse qui vient d'être sommairement décrit.

Le procédé selon l'invention rend en effet concevable le développement de dépôts successifs de couches vitreuses d'épaisseurs variables et contrôlées ou encore la réalisation de tubes, de barreaux ou de préformes de verre fluoré de très grande pureté. Ces composants sont justement à la base de la technologie des fibres optiques en verre fluoré dont les applications sont multiples comme on l'a vu précédemment. Ces fibres optiques présentent un domaine spectral s'étendant de 1 à 4 μm.

La présente invention sera mieux comprise à la lecture de la description suivante d'un mode de réalisation donné à titre d'exemple illustratif et non limitatif, cette description étant faite en faisant référence aux dessins joints, dans lesquels :

- la figure 1 est une courbe représentant la variation de flux thermique exprimée en mW, en fonction de la température exprimée en °C, et
- la figure 2 illustre la variation de la transmission infrarouge exprimée en % en fonction de la longueur d'onde $\lambda$ en micromètres ou du nombre d'ondes $\overline{V}$ en $cm^{-1}$.

Le procédé de synthèse de verre fluoré selon l'invention comprend les étapes consistant à :

- préparer un gel oxygéné humide à partir de précurseurs contenant tous les cations constitutifs dudit verre fluoré,
- hydrolyser ce gel,
- sécher ce gel, puis
- traiter ce gel oxygéné par un agent fluorant en phase gazeuse, à une température inférieure à la température de cristallisation du verre.

Le verre fluoré selon l'invention est synthétisé par la voie sol-gel consistant à préparer une solution de précurseurs contenant tous les cations (métaux) constitutifs du verre que l'on souhaite obtenir, puis à transformer cette solution de précurseurs en un oxyde qui sera ensuite fluoré.

Les cations constitutifs du verre fluoré sont choisis parmi les métaux des groupes Ia, IIa, IIIb, IVb, IIb, IIIa ou IVa de la Classification périodique ou parmi les lanthanides ou les actinides. De préférence, ils sont choisis parmi ceux qui ont été cités au début de la description.

Les précurseurs seront choisis parmi les alcoxydes, les acétates ou les sels des métaux précités, en fonction des cations que l'on souhaite obtenir dans le verre fluoré final. Les acétates ou les sels seront toujours présents simultanément avec des alcoxydes. On peut également avoir des alcoxydes seuls. Les proportions relatives de ces différents précurseurs seront également fonction des pourcentages des cations que l'on souhaite obtenir dans le verre final.

Selon un premier mode de réalisation de l'invention, on formera un gel oxygéné contenant une proportion de variable de silicium ou de bore pouvant atteindre jusqu'à 50% du total des cations se trouvant dans la verre fluoré final, les autres cations étant choisis parmi les cations précités restants. L'incorporation du silicium a pour but de faciliter la formation du gel humide et de prévenir les phénomènes de recristallisation qui pourraient survenir au cours du séchage. La présence du silicium ou du bore n'est évidemment pas compatible avec la formation d'un verre de fluorure de cation lourd, mais on a observé que le silicium ou le bore était éliminé lors de l'étape de fluoration sous forme de tétrafluorure de silicium ou de trifluorure de bore extrêmement volatil.

Un autre mode de réalisation de l'invention consiste à préparer un gel oxygéné contenant uniquement les cations entrant dans la composition finale du verre fluoré recherché, à l'exclusion du silicium et du bore. Cette voie est rendue un peu plus délicate par l'absence du silicium dont l'aptitude à la gélification est remarquable. Elle nécessite donc un contrôle rigoureux des conditions d'introduction et de mélange des précurseurs. Ainsi, on doit éviter que l'alcoxyde de

zirconium lorsqu'il est présent, ne s'hydrolyse très rapidement, par exemple dès l'étape du mélange des précurseurs. Par contre, cette approche permet de réduire la quantité d'agents fluorants nécessaire ultérieurement lors de l'étape de fluoration. En effet, en présence de silicium, chaque atome de silicium consomme 4 anions de fluor. En conséquence, le temps de traitement se trouve raccourci. Enfin, on évite le risque de conserver une concentration résiduelle en silicium qui excède les tolérances souhaitées pour un verre fluoré. En effet, les cations à fort pouvoir polarisant comme le silicium, réduisent la transmission infrarouge aux longueurs d'onde et constituent des sites de fixation privilégiés pour l'oxygène anionique. Ceci n'est pas souhaitable dans la réalisation de fibres optiques.

D'une manière générale, on introduit sous forme d'alcoxydes, les cations qui devront être présents de façon majoritaire dans le verre fluoré obtenu. Ces alcoxydes métalliques présentent la formule générale $M(RO)_n$ où M représente le métal, c'est-à-dire l'un des cations constitutifs du verre fluoré, R est un radical alkyle et n représente la valence du métal. R est un radical alkyle linéaire ou ramifié comportant de 1 à 4 atomes de carbone. Comme radicaux R, on peut citer les radicaux méthyle, éthyle, n-propyl, isopropyl, n-butyl, isobutyl, le sec-butyl ou le ter-butyle.

Parmi ces alcoxydes, on préfère utiliser les méthoxydes, car ils libèrent par hydrolyse du méthanol qui s'élimine plus facilement que les alcools plus lourds. Cependant, on peut être amené à utiliser des alcoxydes plus lourds, soit parce qu'ils sont plus facilement manipulables, par exemple moins sensibles à l'humidité, soit parce qu'ils sont plus facilement disponibles commercialement, c'est le cas en particulier du propoxyde de zirconium.

Ces alcoxydes sont dissous dans une solution alcoolique. Les alcools sont généralement choisis parmi les alcools aliphatiques ayant de 1 à 4 atomes de carbone, c'est-à-dire le méthanol, l'éthanol, le n-propanol, l'iso-propanol, le n-butanol, l'iso-butanol, le sec-butanol ou le ter-butanol ou des mélanges de ceux-ci. Des alcools plus lourds peuvent être envisagés mais ils risquent de présenter des inconvénients pratiques lors de leur élimination.

On pourrait également utiliser comme solvant de l'acétone.

Dans la mesure où les cations présents de façon majoritaire dans le verre fluoré sont introduits sous forme d'alcoxydes, on peut amener les autres cations présents dans le verre uniquement de façon minoritaire, sous forme de sels dissous dans une solution aqueuse, alcoolique ou acide. Ces sels sont par exemple des carbonates, des oxalates, des chlorures ou des nitrates d'un des cations précités. Leur utilisation est liée aux précipitations éventuelles qui peuvent survenir en cours de préparation et qui dépendent principalement des concentrations relatives des divers réactifs.

Les solutions alcooliques utilisées sont identiques à celles précitées, utilisées pour dissoudre les alcoxydes.

Comme solution acide, on utilisera généralement les acides carboxyliques et en particulier l'acide acétique. On peut également y adjoindre une quantité variable d'un acide minéral tel que l'acide chlorhydrique ou l'acide nitrique sous réserve toutefois qu'il ne soit pas utilisé simultanément avec du baryum lorsque celui-ci est présent dans la préparation. Les acides minéraux tels que les acides sulfurique et phosphorique sont déconseillés en raison de leur difficulté à être éliminés.

Généralement, cette solution servira de réactif d'hydrolyse du gel contenant les alcoxydes présents dans la solution alcoolique de départ. On notera que la limite de la mise en oeuvre de cette technique est liée au produit de solubilité. Si l'un des sels est peu soluble dans la phase liquide, il précipitera à l'état de poudre microcristalline et l'on ne pourra jamais obtenir le matériau vitreux ou amorphe souhaité. C'est le cas en particulier du nitrate de baryum dès que sa concentration devient notable. Ceci explique pourquoi en pratique on évitera la présence simultanée du baryum et d'ions nitrate.

On peut également utiliser comme précurseurs, (conjointement avec les alcoxydes), des acétates de l'un des cations précités et notamment des acétates de lanthane, d'aluminium ou de sodium dissous dans l'une des solutions alcooliques précitées.

Les concentrations respectives des précurseurs et des solvants peuvent être très variables. Un large excès de solvant se traduira par un accroîssement sensible du temps de séchage et de densification et par une moindre viscosité au moment de la gélation. On essayera donc d'avoir une concentration de précurseur dans le solvant aussi élevée que possible. On se place donc dans des conditions qui ne sont pas trop éloignées de la saturation. Lorsque les précurseurs sont déjà fournis commercialement en solution alcoolique, on utilise cette solution directement. Avec des précurseurs solides, on procède d'abord à une dissolution en milieu alcoolique dans un volume minimum mais suffisant toutefois pour ne pas requérir un temps de solubilisation trop grand. Le tétraméthoxysilane qui est liquide à l'état pur est utilisé tel quel.

L'hydrolyse du gel ainsi préparé peut donc s'effectuer comme cela a été décrit précédemment par une solution acide, telle que l'une de celles précitées.

Les réactions chimiques se déroulant lors de la préparation des gels oxygénés sont les suivantes.

Les deux réactions d'hydrolyse pouvant survenir sont les suivantes :

$$M(OR)_n + H_2O \rightarrow M(OR)_{n-1}OH + ROH \qquad (I)$$

ou de façon générale :

$$M(OR)_n + nH_2O \rightarrow M(OH)_n + nROH \qquad (II)$$

n étant un nombre entier compris entre 1 et 4, M représentant l'un des métaux précités correspondants aux cations constitutifs du verre fluoré et R représentant un groupe alkyle contenant de 1 à 4 atomes de carbone tels que ceux qui ont été cités précédemment.

L'étape de séchage du gel est ensuite effectuée à une température comprise de préférence entre 20 et 120°C environ. Au cours de cette étape de séchage, on observe une polycondensation permettant la création d'un groupement oxyde à partir de deux groupements hydroxyles qui se condensent, ainsi qu'une élimination d'eau, selon l'une des deux réactions suivantes :

$$M(OR)_{n-1}OH + M(OR)_{n-1}OH \longrightarrow (OR)_{n-1}MO-M(OR)_{n-1} + H_2O\nearrow \quad (III)$$

ou de façon générale :

$$M(OR)_{n-m}(OH)_m + M(OR)_{n-p}(OH)_p \longrightarrow (OR)_{n-m}(OH)_{m-1}M-O-M(OR)_{n-p}(OH)_{p-1} + H_2O\nearrow \quad (IV)$$

avec M et R ayant la même signification que précédemment, n, m et p étant des entiers compris respectivement entre 1 et 4, entre 1 et 3 et entre 1 et 3.

Le dépôt de la solution colloïdale de précurseurs s'effectue par trempage (technique connue sous le terme anglais de "dip coating") ou par pulvérisation à partir d'une solution de viscosité réduite. La centrifugation peut également conduire à des résultats satisfaisants. Ensuite, on procède à l'étape de fluoration.

L'étape caractéristique de l'invention consiste à réaliser un traitement de fluoration du gel oxygéné préparé comme cela a été décrit précédemment. Cette étape de fluoration est réalisée à l'aide d'un agent fluorant en phase gazeuse, choisi de façon avantageuse parmi le fluorure d'hydrogène HF. Celui-ci constitue un réactif adapté car il est disponible couramment commercialement à un degré de pureté élevé. De plus, sa manipulation ne pose pas des problèmes pratiques très ardus. On peut toutefois utiliser également de façon très satisfaisante, le fluor gazeux, pur ou dilué dans un courant de gaz inerte ou encore les trifluorures de brome ou de chlore. La réactivité bien connue de ces produits permet en effet de réaliser des fluorations à température plus basse ou avec une cinétique plus rapide qu'avec le fluorure d'hydrogène.

La température de ce traitement de fluoration est ajustée en fonction de la nature de l'agent fluorant, de la masse du gel et du temps de réaction, mais elle est généralement comprise entre 150°C et 250°C environ.

Toutefois, on a pu observer qu'avec du fluorure d'hydrogène, et pour les températures inférieures à 150°C, la durée de l'étape de fluoration était généralement supérieure à 10 heures, ce qui commence à rendre difficile et coûteuse la mise en oeuvre pratique du procédé selon l'invention. On préférera donc en conséquence ne pas descendre en dessous des températures inférieures à 150°C. Inversement, une fluoration au-delà de 400°C conduit facilement à un mélange de fluorures complexes cristallisés. Lorsque l'on évite de dépasser 250°C, la poudre finale obtenue reste sous forme amorphe, à condition toutefois que le gel initial le soit lui-même.

Par ailleurs, on démontre facilement que, outre la température, c'est le rapport entre les pressions partielles de l'agent fluorant, notamment du fluorure d'hydrogène, et de l'eau qui se révèle important pour la cinétique de la réaction.

La fluoration correspond à une réaction chimique dans la constante d'équilibre est égale au rapport des pressions partielles d'eau et de fluorure d'hydrogène ou plus généralement d'agent fluorant. Ce rapport peut être évalué assez facilement. L'étape de fluoration étant effectuée à l'intérieur d'une enceinte, la pression partielle de HF à l'intérieur de celle-ci est voisine de 760 mm de mercure. La pression de vapeur d'eau à la sortie de l'enceinte est habituellement celle de la vapeur d'eau saturante de l'eau vers 30 à 40°C, soit environ 50 mm de Hg. Le rapport entre les pressions partielles de fluorure d'hydrogène et d'eau est donc environ de l'ordre de 15. Il est donc souhaitable que cette valeur soit supérieure à 10, car en dessous de 10 on augmente le temps et la température de traitement, ce qui est préjudiciable au rendement du procédé ou à la nature du substrat utilisé pour déposer le gel oxygéné.

Les réactions de fluoration survenant à l'intérieur de cette enceinte sont les suivantes, en fonction de l'oxyde de départ obtenu après l'étape de condensation :

$$MO_2 + 4HF \rightarrow MF_4 + 2H_2O \quad (V)$$

$$M_2O_3 + 6HF \rightarrow 2MF_3 + 3H_2O \quad (VI)$$

$$MO + 2HF \rightarrow MF_2 + H_2O \quad (VII)$$

$$MO_{k-x}(OH)_{2x} + 2xHF \rightarrow MF_{2k} + 2xH_2O \quad (VIII)$$

M représentant l'un des métaux précédemment cités, k étant généralement compris entre 1 et 2 et x étant une valeur variable correspondant au degré d'hydratation résiduelle du gel au moment de sa fluoration.

On veillera à entretenir un flux de HF gazeux à l'intérieur de l'enceinte afin d'éliminer l'eau engendrée par la réaction de fluoration et celle qui restait encore dans le gel oxygéné à l'issue de l'étape de séchage.

Le procédé de synthèse selon l'invention peut permettre de réaliser des verres connus sous les dénominations standards de ZB, ZNB, ZBNA, ZBLA ou ZBLAN. Ces verres contiennent des pourcentages particuliers de différents fluorures, dont les quantités sont reproduites dans le tableau 1 ci-après.

Tableau 1

| Noms des verres fluorés | Pourcentages de | | | | |
|---|---|---|---|---|---|
| | $ZrF_4$ | $BaF_2$ | $AlF_3$ | $LaF_3$ | NaF |
| ZB | 60 | 40 | - | - | - |
| ZNB | 57 | 29 | - | - | 14 |
| ZBNA | 52 | 24 | 4 | - | - |
| ZBLA | 57 | 34 | 4 | 5 | - |
| ZBLAN | 53 | 20 | 3 | 4 | 20 |

Les exemples suivants décrivent les essais réalisés lors de la mise en oeuvre du procédé de synthèse selon l'invention.

Exemple 1

On a préparé un gel oxygéné humide et stable à partir des précurseurs suivants : propoxyde de zirconium, Zr $(OC_3H_7)_4$, méthoxydes de silicium et de sodium, $Si(OCH_3)_4$ et $Na(OCH_3)$ et chlorure de baryum $BaCl_2$. Les alcoxydes étaient dissous dans une solution de méthanol. Le chlorure de baryum a été dissous dans une solution d'acide chlorhydride qui a été utilisée pour réaliser l'étape d'hydrolyse. A l'issue de cette étape, on a obtenu environ 20 g d'un gel humide contenant, en proportions cationiques relatives 57% de Zr, 29% de Ba et 14% de Na. La quantité de silicium introduit était, en moles, voisine de celle du zirconium.

On a ensuite réalisé une étape de séchage progressif de ce gel à l'air, durant une semaine, puis par passage à l'étuve à 110°C pendant 10 heures. Ensuite, le gel a été soumis au traitement de fluoration par du fluorure d'hydrogène gazeux, durant 3 heures, à 300°C. Bien que la gamme de température de fluoration aille de préférence de 150 à 250°C, il est possible de s'écarter de ces valeurs optimales, sans toutefois dépasser les températures de transition vitreuse. Ces dernières sont généralement comprises entre 250 et 400°C en fonction des différents verres.

La poudre obtenue après traitement a ensuite été portée à la fusion en creuset de platine et en atmosphère d'air sec. Après coulée, on a obtenu un échantillon de verre ZNB transparent dont la courbe d'analyse thermique différentielle présente les caractéristiques attendues pour un verre de cette composition.

Exemple 2

On a préparé un gel oxygéné humide à partir des précurseurs suivants : propoxyde de zirconium, d'aluminium et de lanthane et éthoxyde de baryum. La masse de ces précurseurs était de 8 g. Le gel obtenu présentait les proportions cationiques relatives de 57% de Zr, 34% de Ba, 5% de La et 4% de Al, ce qui correspond à celles du verre fluoré standard ZBLA. L'ensemble se trouvait dans une solution alcoolique. La solution sol-gel a été introduite dans un ballon de verre raccordé à un réfrigérant puis chauffée à 60°C avec agitation.

On a ensuite réalisé l'étape d'hydrolyse en ajoutant une solution d'acide acétique contenant un léger excès d'eau par rapport à la quantité théorique. L'agitation a été maintenue pendant 3 à 6 heures. Après refroidissement, on a coulé le liquide obtenu dans un récipient où il a gélifié après 10 à 20 heures. On a ensuite opéré un séchage progressif du liquide à température ambiante et à l'air ambiant pendant 5 à 10 jours. On a obtenu des fragments de matériau transparents et rigides que l'on a séché encore par un étuvage entre 90 et 130°C. Le traitement de fluoration a été réalisé par du fluorure d'hydrogène gazeux pendant 1 heure, à 210°C. Le spectre de diffraction aux rayons X confirme que le matériau final est amorphe. L'analyse en calorimétrie différentielle à balayage en a confirmé la nature vitreuse.

Exemple 3

Un gel oxygéné humide a été préparé à partir des précurseurs suivants : propoxydes de zirconium, d'aluminium et de lanthane, méthoxyde de sodium et éthoxyde le baryum dissous dans de l'éthanol. On a obtenu une vingtaine de grammes d'un gel humide de composition cationique relative de 53% de Zr, 20% de Ba, 4% de La et 3% de Na correspondant au verre fluoré standard connu sous l'appellation ZBLAN. L'étape d'hydrolyse a été effectuée avec de l'acide acétique.

Après séchage, puis traitement de fluoration réalisé avec de l'hydrogène fluoré gazeux pendant 90 minutes, à 200°C, on a obtenu une poudre.

L'analyse calorimétrique différentielle de cette poudre est reproduite sur la figure 1 jointe. Cette figure exprime la variation du flux thermique en fonction de la température T pour une vitesse de montée en température de 10°C par minute. On note au repère A le décrochement caractéristique de la transition vitreuse. Il traduit la différence de capacité calorifique du verre à l'état solide (avant la transition) et à l'état pâteux et liquide (après la transition). On note au repère B, les pics exothermiques de cristallisation et au repère C le signal endothermique de fusion. L'existence d'un ensemble de plus exothermiques en B démontre que le matériau recristallise et donc qu'il était encore amorphe avant cette température. L'existence de la transition vitreuse et de la recristallisation constituent des preuves de la nature vitreuse de la poudre. Une poudre amorphe ne présenterait en effet que les pics exothermiques de recristallisation et pas de décrochement de la ligne de base (repère A). On notera par ailleurs que la courbe d'analyse calorimétrique différentielle, de la poudre de verre obtenue par voie sol-gel est identique à celle d'un verre synthétisé de façon conventionnelle puis réduit en poudre.

Ensuite, la poudre vitreuse a été fondue sous atmosphère anhydre et coulée sous forme d'une plaquette de 3,3 mm d'épaisseur après polissage. Le spectre de transmission infrarouge de cet échantillon est reporté à la figure 2. On note la position de la ligne de base (transmission légèrement supérieure à 80%) qui traduit les pertes de transmission liées aux réflexions Fresnel sur la face d'entrée et la face de sortie, ainsi que les pertes liées à l'imperfection du polissage et de l'échantillonnage dans l'appareil de mesure. L'absence de bande d'absorption vers la longueur d'onde de 3 microns constitue un élément remarquable, ainsi que l'absence d'épaulement dans la frontière d'absorption infrarouge entre 6 et 9 microns. Ces deux observations démontrent le degré de pureté élevé du verre obtenu par cette méthode.

Une fibre optique fabriquée à partir du verre fluoré obtenu par le procédé selon l'invention peut par exemple être fabriquée selon le procédé verrier classique suivant :

On réalise tout d'abord le verre fluoré constituant la gaine et celui constituant le coeur de la fibre optique. On réalise ensuite une préforme en fabriquant un tube du verre de gaine à l'intérieur duquel on coule le verre constituant le coeur de la fibre optique. On obtient alors une préforme que l'on recuit et que l'on polit.

Ensuite, on procède à l'étirage de la préforme en atmosphère protégée, on l'enduit d'une résine par exemple du méthacrylate, et on réalise une polymérisation par UV. Enfin, on enroule la fibre optique obtenue sur un tambour.

Ce procédé de fabrication étant extrêmement classique pour l'homme du métier, il ne sera pas décrit plus en détail.

**Revendications**

**1.** Procédé de synthèse de verre fluoré par voie sol-gel comprenant les étapes consistant à :

- préparer un gel oxygéné humide à partir de précurseurs contenant tous les cations constitutifs dudit verre fluoré,
- hydrolyser ce gel,
- sécher ce gel,

ce procédé étant caractérisé en ce qu'il comprend en outre l'étape consistant à :

- traiter ce gel oxygéné par un agent fluorant en phase gazeuse, à une température inférieure à la température de cristallisation du verre, cet agent fluorant étant choisi parmi le fluorure d'hydrogène, le fluor gazeux, le trifluorure de chlore ou le trifluorure de brome.

**2.** Procédé de synthèse selon la revendication 1, caractérisé en ce que la température de fluoration est compris entre 150°C et 250°C environ.

**3.** Procédé de synthèse selon la revendication 1, caractérisé en ce que les cations constitutifs du verre fluoré sont choisis parmi les éléments des groupes Ia, IIa, IIIa, IVa, IIb, IIIb ou IVb de la classification périodique ou parmi les lanthanides ou les actinides.

**4.** Procédé de synthèse selon la revendication 3, caractérisé en ce que les cations constitutifs du verre fluoré sont

choisis parmi le sodium, le magnésium, le calcium, le strontium, le baryum, le scandium, l'yttrium, le lanthane, le thorium, le zirconium, le hafnium, le zinc, le cadmium, le bore, l'aluminium, le gallium, l'indium, le silicium ou le plomb.

5. Procédé de synthèse selon la revendication 1, 3 ou 4, caractérisé en ce que les précurseurs utilisés pour la préparation du gel oxygéné humide sont des alcoxydes en $C_1$ à $C_4$ des cations constitutifs du verre fluoré, dissous dans une solution alcoolique.

6. Procédé de synthèse selon la revendication 5, caractérisé en ce que les précurseurs sont des méthoxydes des cations constitutifs du verre fluoré.

7. Procédé de synthèse selon la revendication 1, 3 ou 4, caractérisé en ce que les précurseurs utilisés pour la préparation du gel oxygéné humide comprennent des alcoxydes en $C_1$ à $C_4$ des cations constitutifs du verre fluoré, dissous dans une solution alcoolique et des sels des cations constitutifs du verre fluoré, ces sels étant dissous dans une solution aqueuse, alcoolique ou acide.

8. Procédé de synthèse selon la revendication 7, caractérisé en ce que les sels sont choisis parmi les carbonates, les oxalates, les chlorures ou les nitrates.

9. Procédé de synthèse selon la revendication 1, 3 ou 4, caractérisé en ce que les précurseurs utilisés pour la préparation du gel oxygéné humide comprennent des alcoxydes en $C_1$ à $C_4$ des cations constitutifs du verre fluoré, dissous dans une solution alcoolique et des acétates des cations constitutifs du verre fluoré, dissous dans une solution alcoolique.

10. Procédé de synthèse selon la revendication 9, caractérisé en ce que les acétates sont choisis parmi les acétates de lanthane, d'aluminium ou de sodium.

11. Procédé de synthèse selon la revendication 5, 7 ou 9, caractérisé en ce que la solution alcoolique est une solution d'alcool aliphatique en $C_1$ à $C_4$ ou un mélange de ceux-ci.

12. Procédé de synthèse selon la revendication 1, caractérisé en ce que l'hydrolyse du gel se fait par addition d'une solution acide.

13. Procédé de synthèse selon la revendication 7 ou 12, caractérisé en ce que la solution acide est réalisée à partir d'un acide choisi parmi l'acide acétique, l'acide chlorhydrique ou l'acide nitrique.

14. Procédé de synthèse selon la revendication 1, caractérisé en ce que le séchage du gel oxygéné est effectué à une température comprise entre 20 et 120°C environ.

15. Fibre optique fabriquée à partir du verre fluoré préparé selon le procédé de synthèse d'une des revendications 1 à 14.

## Claims

1. Process for the synthesis of fluoride glass by the sol - gel method comprising the stages of preparing a wet oxygenated gel from precursors containing all the cations constituting said fluoride glass, hydrolyzing said gel and drying said gel, said process being characterized in that it also comprises treating said oxygenated gel by a fluorinating agent in the vapour phase, at a temperature below the crystallization temperature of the glass, said fluorinating agent being chosen from among hydrogen fluoride, gaseous fluorine, chlorine trifluoride or bromine trifluoride.

2. Synthesis process according to claim 1, characterized in that the fluorination temperature is between approximately 150 and 250°C.

3. Synthesis process according to claim 1, characterized in that the constituent cations of the fluoride glass are chosen from among elements of groups Ia, IIa, IIIa, IVa, IIb, IIIb or IVb of the periodic classification of elements or from among lanthanides or actinides.

4. Synthesis process according to claim 3, characterized in that the constituent cations of the fluoride glass are chosen from among sodium, magnesium, calcium, strontium, barium, scandium, yttrium, lanthanum, thorium, zirconium, hafnium, zinc, cadmium, boron, aluminium, gallium, indium, silicon or lead.

5. Synthesis process according to claim 1, 3 or 4, characterized in that the precursors used for the preparation of the wet oxygenated gel are $C_1$ to $C_4$ alkoxides of constituent cations of the fluoride glass dissolved in an alcoholic solution.

6. Synthesis process according to claim 5, characterized in that the precursors are methoxides of constituent cations of the fluoride glass.

7. Synthesis process according to claim 1, 3 or 4, characterized in that the precursors used for the preparation of the wet oxygenated gel incorporate $C_1$ to $C_4$ alkoxides of constituent cations of the fluoride glass dissolved in an alcoholic solution and salts of the constituent cations of the fluoride glass, said salts being dissolved in an aqueous, alcoholic or acid solution.

8. Synthesis process according to claim 7, characterized in that the salts are chosen from among carbonates, oxalates, chlorides or nitrates.

9. Synthesis process according to claim 1, 3 or 4, characterized in that the precursors used for the preparation of the wet oxygenated gel comprise $C_1$ to $C_4$ alkoxides of the constituent cations of the fluoride glass dissolved in an alcoholic solution and acetates of the constituent cations of the fluoride glass dissolved in an alcoholic solution.

10. Synthesis process according to claim 9, characterized in that the acetates are chosen from among lanthanum, aluminium or sodium acetates.

11. Synthesis process according to claim 5, 7 or 9, characterized in that the alcoholic solution is a $C_1$ to $C_4$ aliphatic alcohol solution or a mixture thereof.

12. Synthesis process according to claim 1, characterized in that the hydrolysis of the gel takes place by adding an acid solution.

13. Synthesis process according to claim 7 or 12, characterized in that the acid solution is obtained from an acid chosen from among acetic, hydrochloric or nitric acid.

14. Synthesis process according to claim 1, characterized in that the oxygenated gel is dried at a temperature between approximately 20 and 120°C.

15. Optical fibre produced from the fluoride glass prepared according to the synthesis process of any one of the claims 1 to 14.

## Patentansprüche

1. Verfahren zur Synthese von Fluoridglas durch das Sol-Gel-Verfahren, folgende Schritte umfassend:

   - Herstellen eines feuchten sauerstoffhaltigen Gels aus Vorläufern, die alle konstitutiven Kationen des besagten Fluoridglases enthält,
   - Hydrolysieren dieses Gels,
   - Trocknen dieses Gels,

   wobei dieses Verfahren **dadurch gekennzeichnet** ist, daß es außerdem den folgenden Schritt umfaßt:

   - Behandeln dieses sauerstoffhaltigen Gels durch ein Fluorierungs- bzw. Fluoridierungsmittel in der Gasphase bei einer Temperatur unterhalb der Kristallisationstemperatur des Glases, wobei dieses Fluorierungs- bzw. Fluoridierungsmittel ausgewählt wird unter Fluorwasserstoff, gasförmigem Fluor, Chlortrifluorid oder Bromtrifluorid.

2. Syntheseverfahren nach Anspruch 1, dadurch gekennzeichnet, daß die Fluorierungs- bzw. Fluoridierungstemperatur enthalten ist zwischen ungefähr 150°C und 250°C.

3. Syntheseverfahren nach Anspruch 1, dadurch gekennzeichnet, daß die konstitutiven Kationen des Fluoridglases

ausgewählt werden unter den Elementen der Gruppen Ia, IIa, IIIa, IVa, IIb, IIIb oder IVb des Periodensystems oder unter den Lathanoiden oder den Actinoiden.

4. Syntheseverfahren nach Anspruch 3, dadurch gekennzeichnet, daß die konstitutiven Kationen des Fluoridglases ausgewählt werden unter Natrium, Magnesium, Calcium, Strontium, Barium, Scandium, Yttrium, Lanthan, Thorium, Zirkon, Hafnium, Zink, Cadmium, Bor, Aluminium, Gallium, Indium, Silicium oder Blei.

5. Syntheseverfahren nach Anspruch 1, 3 oder 4, dadurch gekennzeichnet, daß die zur Herstellung des feuchten sauerstoffhaltigen Gels verwendeten Vorläufer $C_1$- bis $C_4$-Alkoxide der konstitutiven Kationen des Fluoridglases sind, aufgelöst in einer alkoholischen Lösung.

6. Syntheseverfahren nach Anspruch 5, dadurch gekennzeichnet, daß die Vorläufer Methoxide der konstitutiven Kationen des Fluoridglases sind.

7. Syntheseverfahren nach Anspruch 1, 3 oder 4, dadurch gekennzeichnet, daß die zur Herstellung des feuchten sauerstoffhaltigen Gels verwendeten Vorläufer $C_1$- bis $C_4$-Alkoxide der konstitutiven Kationen des Fluoridglases umfassen, aufgelöst in einer alkoholischen Lösung, und Salze der konstitutiven Kationen des Fluoridglases, wobei diese Salze in einer wäßrigen, alkoholischen oder sauren Lösung aufgelöst werden.

8. Syntheseverfahren nach Anspruch 7, dadurch gekennzeichnet, daß die Salze ausgewählt werden unter den Carbonaten, den Oxalaten, den Chloriden oder den Nitraten.

9. Syntheseverfahren nach Anspruch 1, 3 oder 4, dadurch gekennzeichnet, daß die zur Herstellung des feuchten sauerstoffhaltigen Gels verwendeten Vorläufer $C_1$- bis $C_4$-Alkoxide der konstitutiven Kationen des Fluoridglases umfassen, aufgelöst in einer alkoholischen Lösung, und Acetate der konstitutiven Kationen des Fluoridglases, aufgelöst in einer alkoholischen Lösung.

10. Syntheseverfahren nach Anspruch 9, dadurch gekennzeichnet, daß die Acetate ausgewählt werden unter den Acetaten von Lanthan, Aluminium oder Natrium.

11. Syntheseverfahren nach Anspruch 5, 7 oder 9, dadurch gekennzeichnet, daß die alkoholische Lösung eine Lösung aus einem aliphatischen $C_1$- bis $C_4$-Alkohol ist oder eine Mischung aus diesen.

12. Syntheseverfahren nach Anspruch 1, dadurch gekennzeichnet, daß die Hydrolyse des Gels durch Zugabe einer sauren Lösung erfolgt.

13. Syntheseverfahren nach Anspruch 7 oder 12, dadurch gekennzeichnet, daß die saure Lösung hergestellt wird mit einer Säure, ausgewählt zwischen Essigsäure, Salzsäure oder Salpetersäure.

14. Syntheseverfahren nach Anspruch 1, dadurch gekennzeichnet, daß das Trocknen des sauerstoffhaltigen Gels bei einer Temperatur zwischen ungefähr 20 und 120°C erfolgt.

15. Optische Faser, hergestellt aus Fluoridglas, zubereitet nach dem Syntheseverfahren nach einem der Ansprüche 1 bis 14.

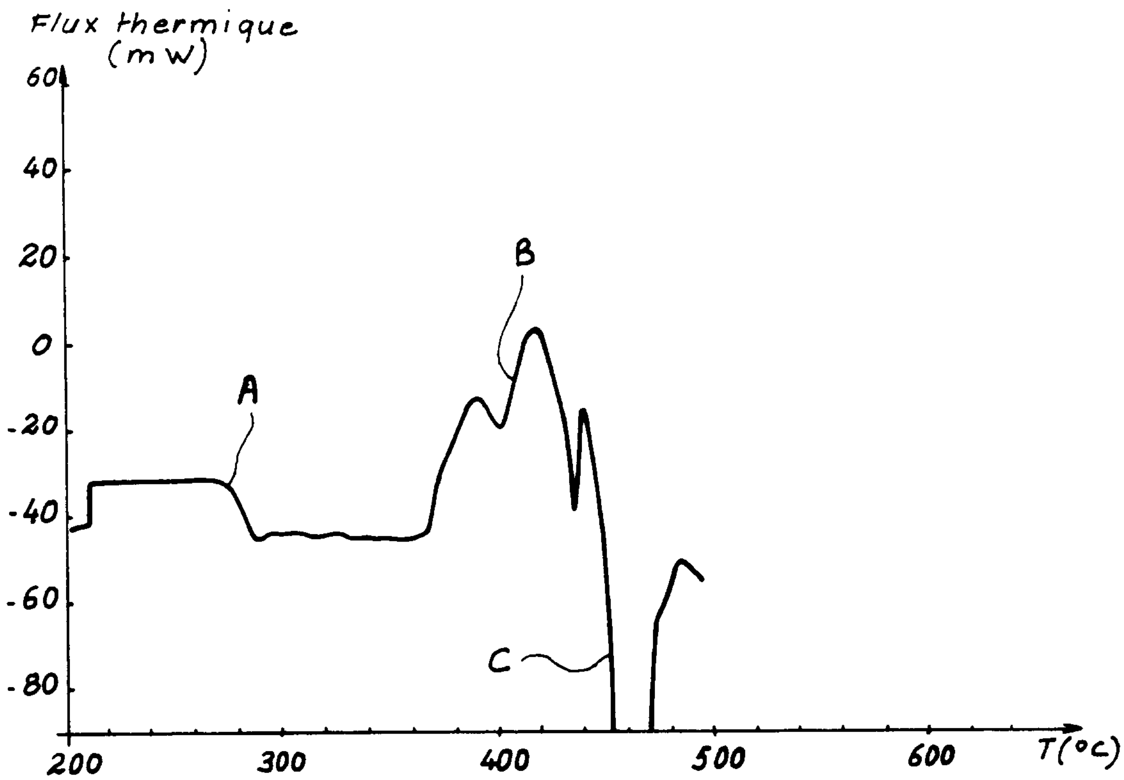
Flux thermique
(mW)
60
40
20
0
-20
-40
-60
-80
A
B
C
200
300
400
500
600
T(°C)

FIG. 1

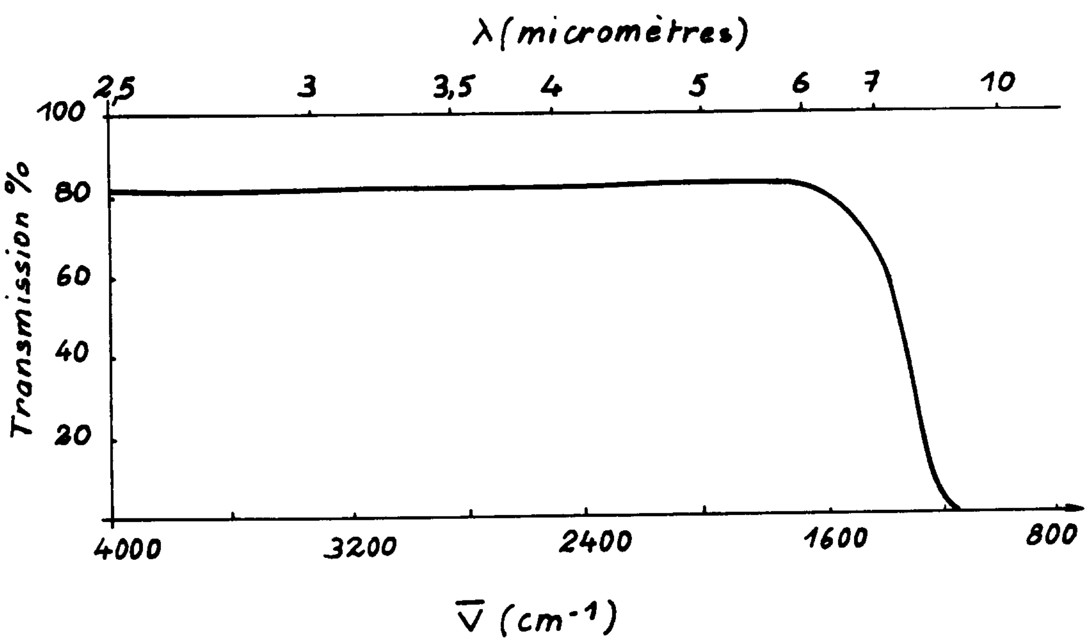
λ (micromètres)
2,5
3
3,5
4
5
6
7
10
Transmission %
100
80
60
40
20
4000
3200
2400
1600
800
$\bar{\nu}$ ($cm^{-1}$)

FIG. 2